# EUROPEAN PATENT SPECIFICATION

(11) **EP 3 174 145 B1**
(45) Date of publication and mention of the grant of the patent: **05.06.2019**
(21) Application number: 14898192.1
(22) Date of filing: 24.07.2014
(51) Int. Cl.: H01M 8/04, H01M 8/04111, H01M 8/04082, H01M 8/0438, H01M 8/04537, H01M 8/04746

(54) **FUEL CELL SYSTEM**
BRENNSTOFFZELLENSYSTEM
SYSTÈME DE PILE À COMBUSTIBLE

(43) Date of publication of application: 31.05.2017
(73) Proprietor: NISSAN MOTOR CO., LTD., Yokohama-shi, Kanagawa 221-0023 (JP)
(72) Inventor: KANEKO, Youhei, Atsugi-shi Kanagawa 243-0123 (JP); TAKEMOTO, Shinichirou, Atsugi-shi Kanagawa 243-0123 (JP)
(74) Representative: Grünecker Patent- und Rechtsanwälte PartG mbB
(86) International application number: PCT/JP2014/069623
(87) International publication number: WO 2016/013091

(56) References cited:
- JP-A- 2005 044 571
- JP-A- 2005 259 439
- JP-A- 2012 164 457
- US-A1- 2002 163 200
- US-A1- 2003 035 988

## Description

### TECHNICAL FIELD

The present invention relates to a fuel cell system.

### BACKGROUND ART

It is disclosed in JP2005-259439A to drive a compressor by anode gas (hydrogen gas) supplied from a high-pressure tank to a fuel cell and supply cathode gas (air) to the fuel cell by the compressor. US 2002/16300 A1 discloses a fuel cell system according to the preamble of independent claim 1.

Further, although not directly pertinent to the supply of cathode gas to a fuel cell by a compressor, JP2003-31244A discloses an anode off-gas circulation device in a fuel cell system. The anode off-gas circulation device includes a compressor configured to reflux anode off-gas discharged from a fuel cell to an anode supply passage and a turbine configured to rotate the compressor by being driven by cathode off-gas discharged from the fuel cell. US 2003/035988 A1 discloses a fuel cell installation containing a gas generation system, for the production of a hydrogen-containing gas, and a fuel cell system, which comprises a fuel cell, a compressor, an expander that is coupled with the compressor and a burner, the exhaust gases of which are directed to the expander. Energy storage and energy conversion devices are arranged between the expander and the compressor in the fuel cell system.

### SUMMARY OF INVENTION

If a system is configured to drive a compressor only by anode gas supplied from a high-pressure tank to a fuel cell like the fuel cell system disclosed in JP2005-259439A, the compressor cannot be driven and cathode gas cannot be supplied to the fuel cell if the anode gas is not supplied to the fuel cell. On the other hand, if a system is configured to drive a compressor only by an electric motor, power performance required for the electric motor to drive the compressor increases, leading to the enlargement of the electric motor.

The present invention aims to provide a fuel cell system enabling the miniaturization of a drive motor for driving a compressor. This object is achieved with a fuel cell system according to independent claim 1. Preferred embodiments are set out in the dependent claims.

According to one embodiment, a fuel cell system including a fuel cell configured such that anode gas and cathode gas are supplied thereto, comprising a compressor configured to supply cathode gas to the fuel cell; and a driving device including at least a drive motor and a driving body using a power source other than the drive motor, the driving device configured to drive the compressor. An energy source of the fuel cell system being used as the power source of the driving body.

### BRIEF DESCRIPTION OF DRAWINGS

FIG. 1 is a schematic configuration diagram of a fuel cell system with a cathode gas supplying device according to a first embodiment not belonging to the present invention,
FIG. 2A is a sectional view showing the cathode gas supplying device in a clutch engaged state,
FIG. 2B is a sectional view showing the cathode gas supplying device in a clutch released state,
FIG. 3 is a flow chart showing a cathode gas supply control according to the first embodiment not belonging to the present invention,
FIG. 4 is a flow chart showing a calculation method of a target compressor suction flow rate,
FIG. 5 is a table for calculating an outputtable torque of a turbine on the basis of a pressure of anode gas as working fluid,
FIG. 6 is a sectional view of a cathode gas supplying device according to a second embodiment not belonging to the present invention,
FIG. 7 shows another modification of the fuel cell system, which belongs to the present invention, with the cathode gas supplying device according to the first or second embodiment,
FIG. 8 shows one modification of the fuel not belonging to the present invention with the cathode gas supplying device according to the first or second embodiment, and
FIG. 9 is a map for calculating an outputtable torque of a turbine on the basis of a pressure and a temperature of anode gas as working fluid.

### DESCRIPTION OF EMBODIMENTS

Hereinafter, embodiments of the present invention are described with reference to the drawings and the like.

### <First Embodiment>

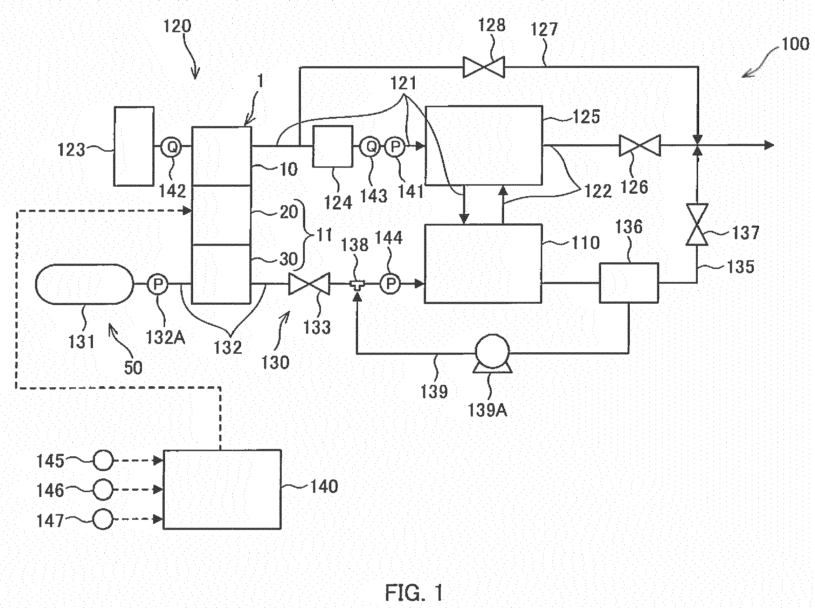

A fuel cell system 100 for a vehicle according to a first embodiment not belonging to the present invention is described with reference to FIG. 1.

The fuel cell system 100 includes a fuel cell stack 110, a cathode gas supplying/discharging device 120, an anode gas supplying/discharging device 130 and a controller 140.

The fuel cell stack 110 is a laminated battery in which a plurality of fuel cells are laminated. The fuel cell stack 110 generates power necessary for vehicle travel upon receiving the supply of anode gas and cathode gas. This generated power is used in various auxiliary machines used when the fuel cell system is operated and a motor for driving wheels.

The cathode gas supplying/discharging device 120 supplies the cathode gas to the fuel cell stack 110 and discharges cathode off-gas discharged from the fuel cell stack 110 to outside. The cathode gas supplying/discharging device 120 includes a cathode gas supply passage 121, a cathode gas discharge passage 122, a gas filter 123, a cathode gas supplying device 1, a cathode gas cooler 124, a water recovery device (hereinafter, referred to as "WRD") 125, a cathode pressure control valve 126, a bypass passage 127, a bypass valve 128, a cathode pressure sensor 141, a first air flow sensor 142 and a second air flow sensor 143.

The cathode gas supply passage 121 is a passage in which the cathode gas to be supplied to the fuel cell stack 110 flows. One end of the cathode gas supply passage 121 is connected to the gas filter 123 and the other end is connected to a cathode gas inlet part of the fuel cell stack 110.

The cathode gas discharge passage 122 is a passage in which the cathode off-gas discharged from the fuel cell stack 110 flows. One end of the cathode gas discharge passage 122 is connected to a cathode gas outlet part of the fuel cell stack 110 and the other end is formed as an opening end. The cathode off-gas is mixture gas containing the cathode gas, steam generated by an electrode reaction and the like.

The gas filter 123 is provided on the leading end of the cathode gas supply passage 121. The gas filter 123 removes dust, dirt and the like contained in air (cathode gas) to be taken into the cathode gas supply passage 121.

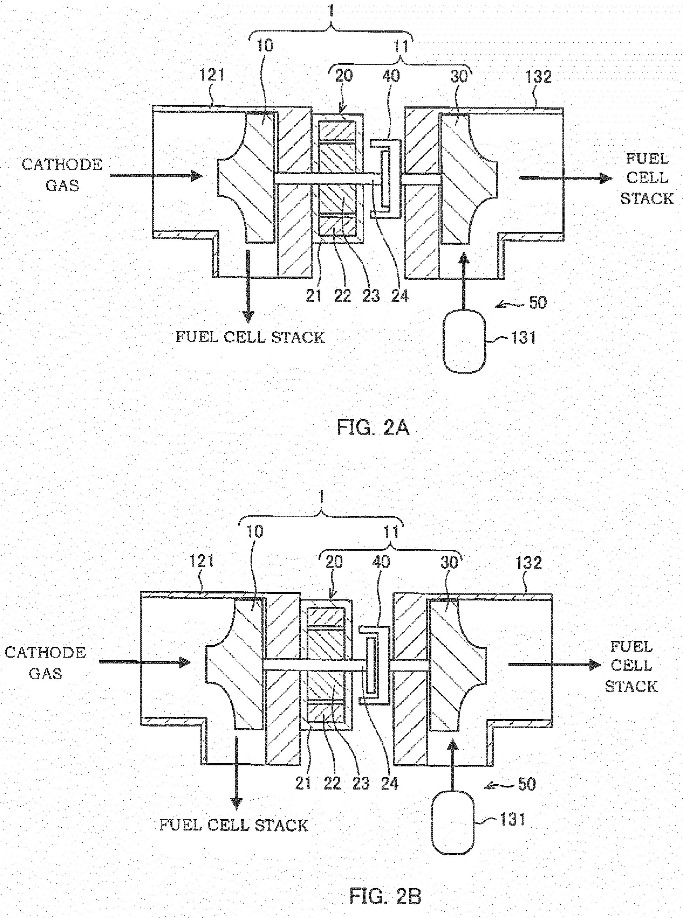

The cathode gas supplying device 1 is provided downstream of the gas filter 123 in the cathode gas supply passage 121. The cathode gas supplying device 1 supplies the cathode gas from which foreign matters have been removed by the gas filter 123 to the fuel cell stack 110. The cathode gas supplying device 1 is described in detail with reference to FIGS. 2A and 2B.

As shown in FIG. 2A, the cathode gas supplying device 1 includes a compressor 10 configured to feed the cathode gas under pressure and a driving device 11 configured to drive the compressor 10. The driving device 11 includes an electric motor 20 as a first driving source configured to drive the compressor 10, a turbine 30 as a second driving source configured to drive the compressor 10 and a clutch 40 provided between the electric motor 20 and the turbine 30. In the present embodiment, a high-pressure tank 131 configured to supply the anode gas to the fuel cell stack 110 is used as a working fluid supplying device 50 configured to supply working fluid for driving the turbine 30 to the turbine 30, and the anode gas supplied from the high-pressure tank 131 is utilized as the working fluid. Specifically, the anode gas is used as a power source of the turbine 30. As just described, the driving device 11 includes at least two compressor driving sources including the electric motor 20 and the turbine 30 using the power source other than the drive motor 20, and drives the compressor 10 by these compressor driving sources.

The compressor 10 is provided in the cathode gas supply passage 121. The compressor 10 is arranged between the gas filter 123 and the cathode gas cooler 124. The compressor 10 is configured to supply the cathode gas to the fuel cell stack 110 by being rotationally driven. The compressor 10 is driven by motive power of either one or both of the electric motor 20 and the turbine 30.

The electric motor 20 is arranged between the cathode gas supply passage 121 and an anode gas supply passage 132. The electric motor 20 includes a motor case 21, a stator 22 fixed to the inner peripheral surface of the motor case 21, a rotor 23 rotatably arranged inside the stator 22 and an output rotary shaft 24 provided in the rotor 23.

The electric motor 20 has a function as a motor to be rotationally driven upon receiving the supply of power from an external power supply or the like and a function as a generator configured to generate power by being rotationally driven by an external force.

One end of the output rotary shaft 24 of the electric motor 20 is connected to the compressor 10 and the other end thereof is connected to the turbine 30 via the clutch 40.

The turbine 30 is provided in the anode gas supply passage 132. The turbine 30 is arranged between the high-pressure tank 131 and an anode pressure control valve 133. The turbine 30 is configured to be rotationally driven by the anode gas (working fluid) supplied from the high-pressure tank 131 to the fuel cell stack 110. Specifically, the turbine 30 is configured to convert energy of the anode gas into a drive force. In the present embodiment, the high-pressure tank 131 for supplying the anode gas to the fuel cell stack 110 is utilized as the working fluid supplying device 50 configured to supply the working fluid to the turbine 30. A rotational drive force of the turbine 30 is transmitted to the compressor 10 via the clutch 40 and the output rotary shaft 24 of the electric motor 20.

The compressor 10, the electric motor 20 and the turbine 30 are arranged such that a rotation center axis of the compressor 10, the output rotary shaft 24 of the electric motor 20 and a rotation center axis of the turbine 30 are coaxial. By applying such an arrangement, the cathode gas supplying device 1 can be configured compactly.

The clutch 40 is a power transmitting device configured to switch a connected state of the output rotary shaft 24 of the electric motor 20 and the turbine 30. As shown in FIG. 2A, the output rotary shaft 24 of the electric motor 20 and the turbine 30 are connected in a connected state of the clutch 40 (including a half-clutch state). As shown in FIG. 2B, the connection of the output rotary shaft 24 of the electric motor 20 and the turbine 30 is released in a released state of the clutch 40.

In the cathode gas supplying device 1, each of the electric motor 20 and the turbine 30 functions as an independent driving source for the drive of the compressor 10.

Specifically, in the clutch connected state shown in FIG. 2A, the compressor 10 can be driven only by the rotational drive force of the turbine 30 rotationally driven upon receiving the supply of the anode gas and the cathode gas can be supplied to the fuel cell stack 110. Further, in the clutch connected state shown in FIG. 2A, the compressor 10 can be driven by the rotational drive force of the electric motor 20 rotationally driven by power and that of the turbine 30 rotationally driven upon receiving the supply of the anode gas and the cathode gas can be supplied to the fuel cell stack 110.

On the other hand, in the clutch released state shown in FIG. 2B, the compressor 10 can be driven only by the rotational drive force of the electric motor 20 rotationally driven by power and the cathode gas can be supplied to the fuel cell stack 110. As just described, when the compressor 10 is driven only by the rotational drive force of the electric motor 20, the turbine 30 is prevented from being a load of the electric motor 20 by being separated. In this way, a reduction in the responsiveness of the electric motor 20 due to the turbine 30 acting as a load can be prevented.

Referring back to FIG. 1, the cathode gas cooler 124 is provided downstream of the cathode gas supplying device 1 in the cathode gas supply passage 121. The cathode gas cooler 124 cools the cathode gas discharged from the cathode gas supplying device 1.

The WRD 125 is provided downstream of the cathode gas cooler 124 in the cathode gas supply passage 121. The WRD 125 is provided to cross over a downstream part of the cathode gas supply passage 121 and an upstream part of the cathode gas discharge passage 122. The WRD 125 condenses moisture in the cathode off-gas flowing in the cathode gas discharge passage 122 and humidifies the cathode gas flowing in the cathode gas supply passage 121 with that recovered moisture.

The cathode pressure control valve 126 is provided downstream of the WRD 125 in the cathode gas discharge passage 122. The cathode pressure control valve 126 is controlled to open and close by the controller 140 and adjusts a pressure of the cathode gas to be supplied to the fuel cell stack 110.

The bypass passage 127 is a passage configured to directly discharge part of the cathode gas supplied from the cathode gas supplying device 1 to the cathode gas discharge passage 122 without via the fuel cell stack 110. One end of the bypass passage 127 is connected to a part of the cathode gas supply passage 121 between the cathode gas supplying device 1 and the cathode gas cooler 124 and the other end is connected to a part of the cathode gas discharge passage 122 downstream of the cathode pressure control valve 126.

The bypass valve 128 is provided in the bypass passage 127. The bypass valve 128 is controlled to open and close by the controller 140 and adjusts a flow rate (bypass flow rate) of the cathode gas passing in the bypass passage 127.

The cathode pressure sensor 141 is provided between the cathode gas cooler 124 and the WRD 125 in the cathode gas supply passage 121. The cathode pressure sensor 141 detects a pressure of the cathode gas to be supplied to the fuel cell stack 110.

The first air flow sensor 142 is provided upstream of the compressor 10 in the cathode gas supply passage 121. The first air flow sensor 142 detects a flow rate of the cathode gas to be sucked into the compressor 10 (hereinafter, referred to as a "compressor suction flow rate"). A detection value of this first air flow sensor 142 is referred to as a "detected compressor suction flow rate" below.

The second air flow sensor 143 is provided between the cathode gas cooler 124 and the WRD 125 in the cathode gas supply passage 121. The second air flow sensor 143 detects a flow rate of the cathode gas to be supplied to the fuel cell stack 110 out of the cathode gas discharged from the compressor 10 (hereinafter, referred to as a "stack supply flow rate"). The stack supply flow rate is a flow rate obtained by subtracting the bypass flow rate from a compressor supply flow rate. A detection value of this second air flow sensor 143 is referred to as a "detected stack supply flow rate" below.

Next, the anode gas supplying/discharging device 130 is described. The anode gas supplying/discharging device 130 supplies the anode gas to the fuel cell stack 110 and discharges anode off-gas discharged from the fuel cell stack 110 to the cathode gas discharge passage 122. The anode gas supplying/discharging device 130 includes the high-pressure tank 131, the anode gas supply passage 132, the anode pressure control valve 133, an anode gas discharge passage 135, a buffer tank 136, a purge valve 137 and an anode pressure sensor 144.

The high-pressure tank 131 is a gas storage container configured to store the anode gas (hydrogen gas) to be supplied to the fuel cell stack 110 in a high-pressure state. In the present embodiment, this high-pressure tank 131 also functions as the working fluid supplying device 50 for supplying the working fluid to the turbine 30.

The anode gas supply passage 132 is a passage configured to supply the anode gas discharged from the high-pressure tank 131 to the fuel cell stack 110. One end of the anode gas supply passage 132 is connected to the high-pressure tank 131 and the other end is connected to an anode gas inlet part of the fuel cell stack 110. A working fluid pressure sensor 132A configured to detect a pressure of the anode gas as the working fluid to be supplied to the turbine 30 is provided between the high-pressure tank 131 and the turbine 30 of the cathode gas supplying device 1 in the anode gas supply passage 132.

The anode pressure control valve 133 is provided downstream of the turbine 30 of the cathode gas supplying device 1 in the anode gas supply passage 132. The anode pressure control valve 133 is controlled to open and close by the controller 140 and adjusts a pressure and a flow rate of the anode gas to be supplied to the fuel cell stack 110.

The anode gas discharge passage 135 is a passage in which the anode off-gas discharged from the fuel cell stack 110 flows. One end of the anode gas discharge passage 135 is connected to an anode gas outlet part of the fuel cell stack 110 and the other end is connected to a part of the cathode gas discharge passage 122 downstream of the cathode pressure control valve 126.

The buffer tank 136 is provided in the anode gas discharge passage 135. The buffer tank 136 is a container configured to temporarily store the anode off-gas flowing from the anode gas discharge passage 135. The anode off-gas pooled in the buffer tank 136 is discharged to the cathode gas discharge passage 122 when the purge valve 137 is opened.

The purge valve 137 is provided downstream of the buffer tank 136 in the anode gas discharge passage 135. The purge valve 137 is controlled to open and close by the controller 140 and controls a flow rate (purge flow rate) of the anode off-gas discharged from the anode gas discharge passage 135 to the cathode gas discharge passage 122.

When a purge control is executed by opening the purge valve 137, the anode off-gas is discharged to outside through the anode gas discharge passage 135 and the cathode gas discharge passage 122. At this time, the anode off-gas is mixed with the cathode off-gas in the cathode gas discharge passage 122. By mixing the anode off-gas and the cathode off-gas and discharging them to outside in this way, a hydrogen concentration in discharged gas is set at a value not larger than a discharge allowable concentration.

The anode gas supplying/discharging device 130 further includes an ejector 138, a reflex passage 139 and a reflux pump 139A to reflux the anode off-gas to the anode gas supply passage 132.

The ejector 138 is provided between the anode pressure control valve 133 and the anode pressure sensor 144 in the anode gas supply passage 132.

The reflux passage 139 is a passage for introducing the anode off-gas in the anode gas discharge passage 135 to the anode gas supply passage 132. One end of the reflux passage 139 is connected to the buffer tank 136 in the anode gas discharge passage 135 and the other end is connected to the ejector 138 in the anode gas supply passage 132.

The reflux pump 139A is provided in the reflux passage 139. The reflux pump 139A is driven if necessary and feeds the anode off-gas discharged from the fuel cell stack 110 under pressure from the anode gas discharge passage 135 toward the anode gas supply passage 132.

The anode pressure sensor 144 is provided downstream of the anode pressure control valve 133 in the anode gas supply passage 132. The anode pressure sensor 144 is arranged near the anode gas inlet part of the fuel cell stack 110. The anode pressure sensor 144 detects a pressure of the anode gas to be supplied to the fuel cell stack 110 (= pressure of the anode gas as the working fluid to be supplied to the turbine 30 to be described later).

The fuel cell system 100 configured as described above includes the controller 140 as a control device configured to integrally control this system.

The controller 140 is configured by a microcomputer including a central processing unit (CPU), a read-only memory (ROM), a random access memory (RAM) and an input/output interface (I/O interface).

To the controller 140, signals are input from various sensors configured to detect an operating state of the fuel cell system 100 such as a voltage sensor 145 configured to detect an output voltage of the fuel cell stack 110, a current sensor 146 configured to detect an output current of the fuel cell stack 110 and an accelerator stroke sensor 147 configured to detect a depressed amount of an accelerator pedal of a vehicle besides signals from various sensors described above such as the cathode pressure sensor 141.

The controller 140 controls the cathode gas supplying device 1, the reflux pump 139A, various valves 126, 128, 133, 137 and the like on the basis of detection signals of these sensors and the like.

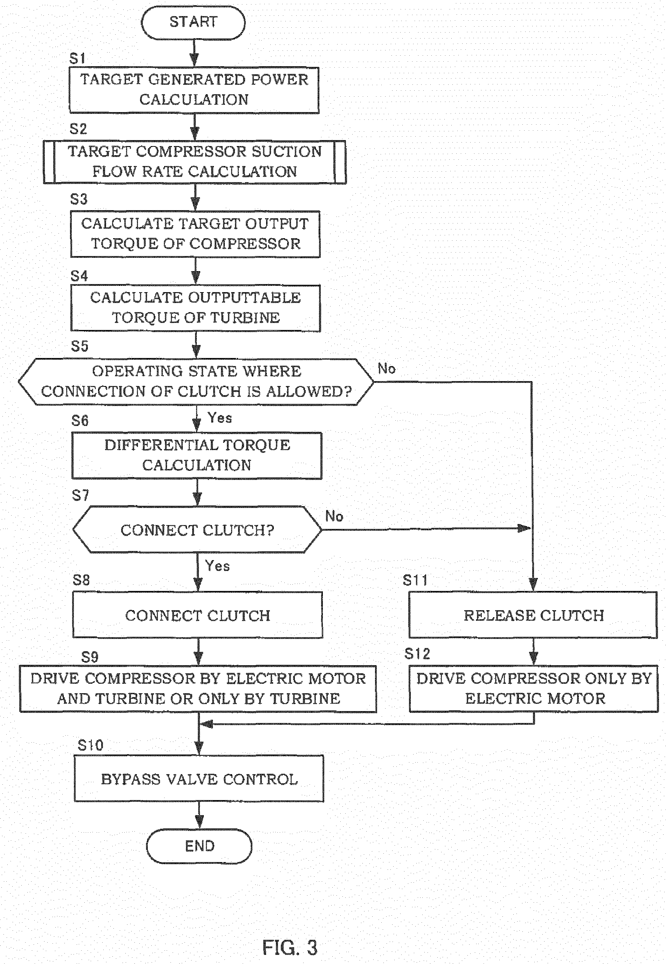

A cathode gas supply control of the fuel cell system 100 according to the first embodiment executed by the controller 140 is described below with reference to a flow chart of FIG. 3. The controller 140 repeatedly executes this routine in a predetermined calculation cycle.

In Step S1, the controller 140 calculates target generated power of the fuel cell stack 110 on the basis of required power of a travel motor (not shown) configured to drive the vehicle, required power of auxiliary machines and charge/discharge requests of a battery (not shown).

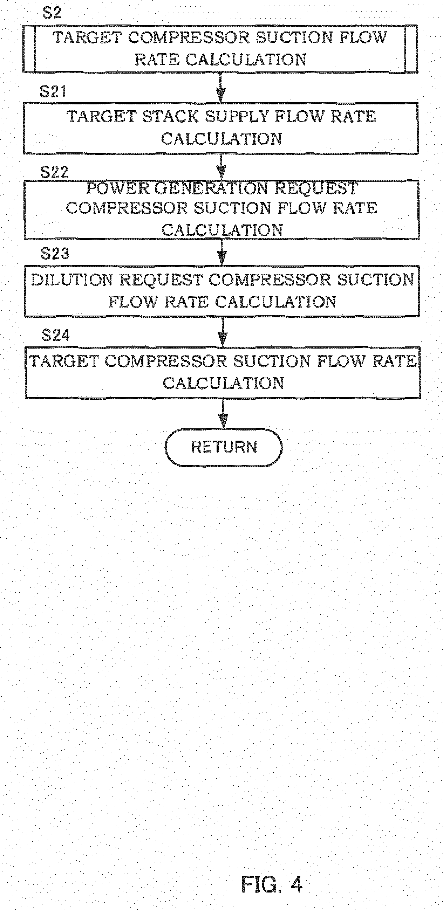

In Step S2, the controller 140 calculates a target value of the compressor suction flow rate (hereinafter, referred to as a "target compressor suction flow rate") on the basis of the operating state of the fuel cell system 100. A specific calculation method of the target compressor suction flow rate is described with reference to FIG. 4.

FIG. 4 is a flow chart showing the calculation method of the target compressor suction flow rate.

In Step S21, the controller 140 calculates a target value of the stack supply flow rate (hereinafter, referred to as a "target stack supply flow rate") on the basis of the target generated power. The target stack supply flow rate corresponds to a stack supply flow rate necessary to ensure an oxygen partial pressure necessary for the electrode reaction in cathode electrodes of the fuel cell stack 110 when the target generated power is generated. In other words, the target stack supply flow rate corresponds to a stack supply flow rate necessary to generate the target generated power. The larger the target generated power is, the larger the target stack supply flow rate becomes.

In Step S22, the controller 140 calculates a compressor suction flow rate necessary for the detected stack supply flow rate to reach the target stack supply flow rate as a power generation request compressor suction flow rate on the basis of a deviation between the detected stack supply flow rate and the target stack supply flow rate.

In Step S23, the controller 140 calculates a dilution request compressor suction flow rate on the basis of the target generated power. The dilution request compressor suction flow rate is a compressor suction flow rate necessary to set the hydrogen concentration of the discharged gas to be discharged to the outside of the fuel cell system 100 to or below the discharge allowable concentration. In the present embodiment, the larger the target generated power, the larger the dilution request compressor suction flow rate becomes. However, the dilution request compressor suction flow rate may be a fixed value regardless of the target generated power.

In Step S24, the controller 140 calculates the target compressor suction flow rate on the basis of the power generation request compressor suction flow rate and the dilution request compressor suction flow rate. Specifically, the larger one of the power generation request compressor suction flow rate and the dilution request compressor suction flow rate is calculated as the target compressor suction flow rate to satisfy both a power generation request and a dilution request. It should be noted that although the larger one of the power generation request compressor suction flow rate and the dilution request compressor suction flow rate is calculated as the target compressor suction flow rate in the present embodiment, the largest one of a cathode gas flow rate necessary to avoid a surge in the compressor 10 (surge request compressor suction flow rate) and the above two request compressor suction flow rates may be, for example, calculated as the target compressor suction flow rate.

Referring back to FIG. 3, in Step S3, the controller 140 calculates a target output torque of the compressor 10 on the basis of the target compressor suction flow rate that changes according to the operating state of the fuel cell system 100. The target output torque of the compressor 10 corresponds to an output torque of the compressor 10 necessary for the detected compressor suction flow rate to reach the target compressor suction flow rate.

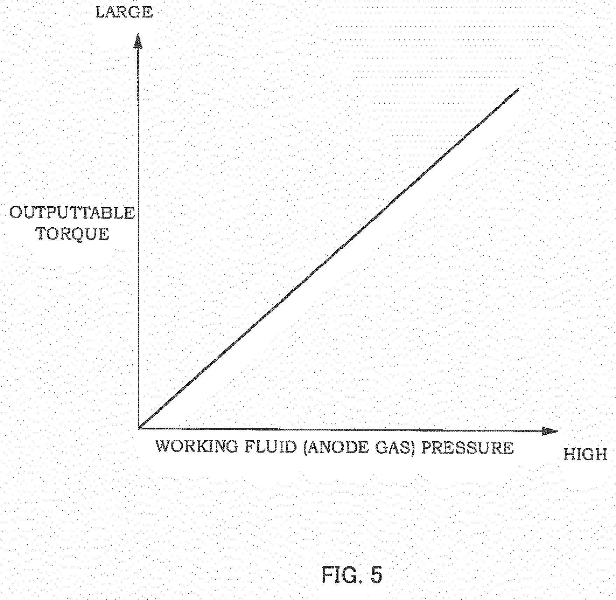

In Step S4, the controller 140 calculates an outputtable torque of the turbine 30 on the basis of the amount of energy of the anode gas as the working fluid to be supplied from the high-pressure tank 131 to the turbine 30. Specifically, as shown in a table of FIG. 5, the outputtable torque of the turbine 30 is calculated on the basis of the pressure of the anode gas as the working fluid to be supplied to the turbine 30. Examples of a parameter correlated with the amount of energy of the anode gas include a flow rate besides the pressure. Thus, the outputtable torque of the turbine 30 can also be calculated on the basis of the flow rate of the anode gas.

It should be noted that the pressure of the anode gas as the working fluid to be supplied to the turbine 30, i.e. the pressure of the anode gas to be supplied to the fuel cell stack 110 is controlled on the basis of the operating state of the fuel cell system 100. Specifically, the controller 140 controls an opening degree of the anode pressure control valve 133 on the basis of the operating state of the fuel cell system 100 such that the pressure of the anode gas to be supplied to the fuel cell stack 110 is not lower than the pressure of the cathode gas to be supplied to the fuel cell stack 110.

In Step S5, the controller 140 determines whether or not an operating state where the connection of the clutch 40 is allowed is set. In the present embodiment, the controller 140 proceeds to a processing of Step S11, assuming an operating state where the connection of the clutch 40 is not allowed, in the case of an operating state where the anode gas is not supplied to the fuel cell stack 110 by a request of the fuel cell system 100, e.g. in the case of an operating state where only the cathode gas is supplied to the fuel cell stack 110 during an idle stop control. Further, only the cathode gas is supplied to reliably dilute hydrogen in an initial stage during the start of the fuel cell system 100 and the anode gas is supplied from a late stage during the start. Thus, an advance is made to the processing of Step S11 without allowing the connection of the clutch 40 also in this case. Further, only the cathode gas is supplied also in a late stage during the stop of the fuel cell system 100. Thus, an advance is made to the processing of Step S11 without allowing the connection of the clutch 40 also in this case. As just described, the controller 140 proceeds to the processing of Step S11, assuming the operating state where the connection of the clutch 40 is not allowed, in the case of the operating state where only the cathode gas is supplied to the fuel cell stack 110 such as in the initial stage during the system start, in the late stage during the system stop and during the idle stop control. On the other hand, the controller 140 proceeds to a processing of Step S6, assuming the operating state where the connection of the clutch 40 is allowed, in the case of a normal operating state where the anode gas is supplied to the fuel cell stack 110. In this way, the controller 140 controls the clutch 40 on the basis of the state of the anode gas serving as the power source of the turbine 30.

It should be noted that the operating state where the anode gas is not supplied to the fuel cell stack 110 is, in other words, an operating state where the outputtable torque of the turbine 30 is zero and an operating state where the turbine 30 is not rotating. Thus, if the operating state where the connection of the clutch 40 is not allowed is determined in Step S5, an advance may be directly made to Step S12 without setting the clutch 40 in a released state. However, since the turbine 30 acts as a load of the electric motor 20 in this case, it is desirable to set the clutch 40 in the released state as in the present embodiment.

In Step S6, the controller 140 calculates a differential torque obtained by subtracting the outputtable torque of the turbine 30 from the target output torque of the compressor10.

In Step S7, the controller 140 determines whether or not to connect the clutch 40. Specifically, it is determined whether or not the differential torque is smaller than a predetermined clutch connection threshold value (predetermined threshold value).

The controller 140 proceeds to a processing of Step S8 to drive the compressor 10 by the electric motor 20 and the turbine 30 with the clutch 40 set in a connected state or drive the compressor 10 only by the turbine 30 if the differential torque is smaller than the clutch connection threshold value. On the other hand, the controller 140 proceeds to the processing of Step S11 to drive the compressor 10 only by the electric motor 20 with the clutch 40 set in the released state if the differential torque is not smaller than the clutch connection threshold value.

The compressor 10 is driven only by the electric motor 20 when the differential torque is not smaller than the clutch connection threshold value for the following reason. Specifically, the differential torque is not smaller than the clutch connection threshold value, for example, before the pressure of the anode gas sufficiently increases and when the outputtable torque of the turbine 30 is small such as immediately after the start of the supply of the anode gas to the fuel cell stack 110. This is because, since motive power obtained by the turbine 30 is small in such a case, the cathode gas can be stably supplied by driving the compressor 10 only by the electric motor 20.

Further, the differential torque is not smaller than the clutch connection threshold value, for example, when the target output torque of the compressor 10 transiently suddenly increases and the outputtable torque of the turbine 30 becomes smaller with respect to the target output torque of the compressor 10 such as during sudden acceleration. This is because the output torque of the compressor 10 can be quickly and accurately controlled to the target output torque and control performance in transient time can be improved by driving the compressor 10 only by the electric motor 20 excellent in responsiveness and controllability in such a case.

As just described, in the present embodiment, a switch is made to the drive of the compressor 10 only by the electric motor 20, only by the turbine 30 or by the electric motor 20 and the turbine 30 according to the differential torque. Here, the differential torque changes according to a state (pressure or flow rate) of the anode gas serving as the power source.

That is, in the present embodiment, the drive of the compressor 10 by either one or both of the electric motor 20 and the turbine 30 can be selected according to the state of the anode gas serving as the power source and the compressor 10 can be driven by a suitable driving source corresponding to the operating state of the fuel cell system 100. The aforementioned clutch connection threshold value may be appropriately set such that the compressor 10 can be driven by a suitable driving source corresponding to the operating state of the fuel cell system 100.

In Step S8, the controller 140 sets the clutch 40 in the connected state.

In Step S9, the controller 140 drives the compressor 10 by the electric motor 20 and the turbine 30 or only by the turbine 30 by controlling the output torque of the electric motor 20 according to the outputtable torque of the turbine 30 determined on the basis of the pressure or flow rate of the anode gas.

Specifically, the controller 140 sets the target output torque of the electric motor 20 as the differential torque and drives the compressor 10 by the electric motor 20 and the turbine 30 if the differential torque calculated in Step S6 is larger than zero (if the outputtable torque is smaller than the target output torque). Specifically, the differential torque is generated by the electric motor 20 and the outputtable torque is generated by the turbine 30, whereby the output torque of the compressor 10 is controlled to the target output torque calculated in Step S3. Examples of the operating state where the compressor 10 is driven by the electric motor 20 and the turbine 30 in this way include an operating state where the fuel cell stack 110 is steadily operated at a high load.

On the other hand, the controller 140 sets the target output torque of the electric motor 20 to zero and drives the compressor 10 only by the turbine 30 if the differential torque calculated in Step S6 is not larger than zero (if the outputtable torque is not smaller than the target output torque). Examples of the operating state where the compressor 10 is driven only by the turbine 30 in this way include an operating state where the fuel cell stack 110 is steadily operated at a low load.

It should be noted that, in the case of driving the compressor 10 only by the turbine 30, the compressor 10 is driven by a torque not smaller than the target output torque of the compressor 10 calculated in Step S3 (= outputtable torque). Thus, the compressor suction flow rate becomes equal to or larger than the target compressor suction flow rate. However, excess cathode gas unnecessary for the fuel cell stack 110 is flowed to the bypass passage 127 by a bypass valve control in the following Step S10 so that no problem occurs.

In Step S10, the controller 140 feedback-controls the bypass valve 128 such that the detected stack supply flow rate reaches the target stack supply flow rate on the basis of a deviation between the detected stack supply flow rate and the target stack supply flow rate.

The cathode gas is discharged from the compressor 10 at a flow rate not smaller than a stack request compressor suction flow rate such as when the compressor 10 is driven only by the turbine 30 or when the dilution request compressor suction flow rate is not set as the target compressor suction flow rate. Thus, excess cathode gas unnecessary for power generation is supplied to the fuel cell stack 110. Therefore, by feedback-controlling the bypass valve 128 such that the detected stack supply flow rate reaches the target stack supply flow rate, excess cathode gas unnecessary for power generation is flowed to the bypass passage 127.

In Step S11, the controller 140 sets the clutch 40 in the released state.

In Step S12, the controller 140 sets the target output torque of the electric motor 20 to the target output torque of the compressor 10 calculated in Step S3 and drives the compressor 10 only by the electric motor 20. Examples of the operating state where the differential torque is not smaller than the clutch connection threshold value in this way include an operating state where the outputtable torque of the turbine 30 is small with respect to the target output torque of the compressor 10 before the pressure of the anode gas sufficiently increases such as immediately after the start of the supply of the anode gas to the fuel cell stack 110. Examples include an operating state where the target output torque of the compressor 10 transiently suddenly increases and the outputtable torque of the turbine 30 becomes smaller with respect to the target output torque of the compressor 10 such as during sudden acceleration.

According to the fuel cell system 100 according to the present embodiment described above, the following effects can be obtained.

The fuel cell system 100 with the fuel cell stack 110, to which the anode gas and the cathode gas are supplied, includes the compressor 10 configured to supply the cathode gas to the fuel cell stack 110, and the driving device 11 including at least two compressor driving sources including the electric motor 20 as a drive motor and the turbine 30 as a driving body using a power source other than the drive motor and configured to drive the compressor 10. An energy source of the fuel cell system 100 is used as the power source of the turbine 30.

Since the compressor 10 can be driven by at least two driving sources including the electric motor 20 and the turbine 30 to be driven using the power source other than the electric motor 20 in this way, it is possible to suppress power performance of the electric motor 20 and miniaturize the electric motor 20. Further, manufacturing cost can be reduced. Since the energy source of the fuel cell system 100 is used as the power source of the turbine 30, the power source of the turbine 30 needs not be newly added and the energy source of the fuel cell system 100 can be used without any waste.

Since the compressor 10 can be driven by the drive force of the electric motor 20 excellent in responsiveness if necessary, the responsiveness of the compressor 10 for supplying the cathode gas to the fuel cell stack 110 can be improved as compared to a conventional cathode gas supplying device in which a compressor is driven only by anode gas supplied from a high-pressure tank to a fuel cell stack. Thus, it is possible to realize suitable cathode gas supply corresponding to the operating state of the fuel cell system 100.

Further, since the electric motor 20 and the turbine 30 are coaxially arranged in the present embodiment, the cathode gas supplying device 1 can be miniaturized.

Further, since the high-pressure anode gas to be supplied to the fuel cell stack 110 is used as the power source of the turbine 30 in the present embodiment, the high-pressure anode gas can be effectively utilized and energy efficiency in the fuel cell system 100 can be enhanced. Since the temperature of the anode gas is reduced when the anode gas is discharged from the high-pressure tank 131, the anode gas having a relatively low temperature is supplied to the turbine 30 and temperature increases of the components around the turbine 30 can be suppressed.

Particularly in the present embodiment, the high-pressure anode gas to be supplied to the turbine 30 is introduced from downstream of the high-pressure tank 131 and returns to upstream of the anode pressure control valve 133 configured to adjust the pressure of the anode gas to be supplied to the fuel cell stack 110. Thus, the turbine 30 itself functions as a pressure losing member for decompressing the anode gas discharged from the high-pressure tank 131, wherefore the anode pressure control valve 133 provided downstream of the turbine 30 can be miniaturized. By miniaturizing the anode pressure control valve 133 in this way, a valve body of the anode pressure control valve 133 becomes smaller and the responsiveness of the anode pressure control valve 133 can be enhanced.

Further, in the present embodiment, the clutch 40 is provided on the output rotary shaft 24 as the power transmission path for transmitting the drive force of the turbine 30 to the compressor 10. Thus, the compressor 10 can be driven only by the electric motor 20 by releasing the clutch 40 if necessary such as in the case of the operating state where the anode gas is not supplied to the fuel cell stack 110. In this way, the turbine 30 itself can be prevented from becoming a load of the electric motor 20 and power consumption efficiency in the electric motor 20 can be enhanced such as when the anode gas is not supplied to the fuel cell stack 110.

It should be noted that, in the fuel cell system 100 according to the present embodiment, the anode pressure control valve 133 is arranged in a part of the anode gas supply passage 132 downstream of the turbine 30. However, the anode pressure control valve 133 needs not be provided downstream of the turbine 30 if the anode gas pressure is reduced to a pressure optimal for power generation in the fuel cell stack 110 by the passage of the anode gas through the turbine 30.

Further, although the electric motor 20 and the turbine 30 are connected via the clutch 40 in the present embodiment, the clutch 40 needs not necessarily be provided. The driving device 11 can be more miniaturized by omitting the clutch 40.

### <Second Embodiment>

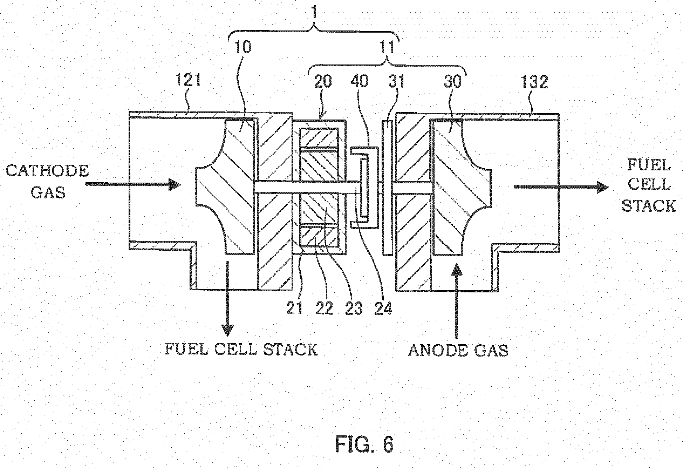

Next, a cathode gas supplying device 1 according to a second embodiment not belonging to the present invention is described with reference to FIG. 6. It should be noted that, in the following embodiment, components and the like fulfilling the same functions as in the first embodiment are denoted by the same reference signs and repeated description is omitted as appropriate.

As shown in FIG. 6, the cathode gas supplying device 1 according to the second embodiment differs from the first embodiment in the configuration of a driving device 11. More specifically, the driving device 11 includes a flywheel 31 configured to rotate together with a turbine 30.

The flywheel 31 is a disk-like weight member and fixed to a rotation center axis of the turbine 30. The flywheel 31, an electric motor 20 and a compressor 10 are coaxially arranged. The flywheel 31 is provided at a position closer to the turbine 30 than a clutch 40 and outside an anode gas supply passage 132. It should be noted that the flywheel 31 may be provided in an anode gas supply passage 132.

Since the driving device 11 according to the present embodiment includes the flywheel 31 configured to rotate together with the turbine 30 as a driving body as just described, rotational energy of the turbine 30 can be accumulated in the flywheel 31. By accumulating the rotational energy in the flywheel 31 in this way, a reduction in the rotation speed of the compressor 10 when the clutch 40 is engaged can be suppressed. In this way, it is possible to prevent a temporary reduction of a cathode gas supply amount immediately after the engagement of the clutch 40 and realize suitable cathode gas supply corresponding to an operating state of a fuel cell system 100.

Although the embodiments of the present invention have been described above, the above embodiments are merely an illustration of some application examples of the present invention and not intended to limit the technical scope of the present invention to the specific configurations of the above embodiments.

Although the cathode gas supplying devices 1 according to the first and second embodiments are mounted in the fuel cell systems 100 for vehicle, they may be mounted in fuel cell systems for movable bodies other than vehicles or stationary fuel cell systems.

Further, although the driving devices 11 according to the first and second embodiments include the turbine 30, a piston motor or a diaphragm motor to be driven upon receiving the supply of working fluid or the like may be used instead of the turbine 30.

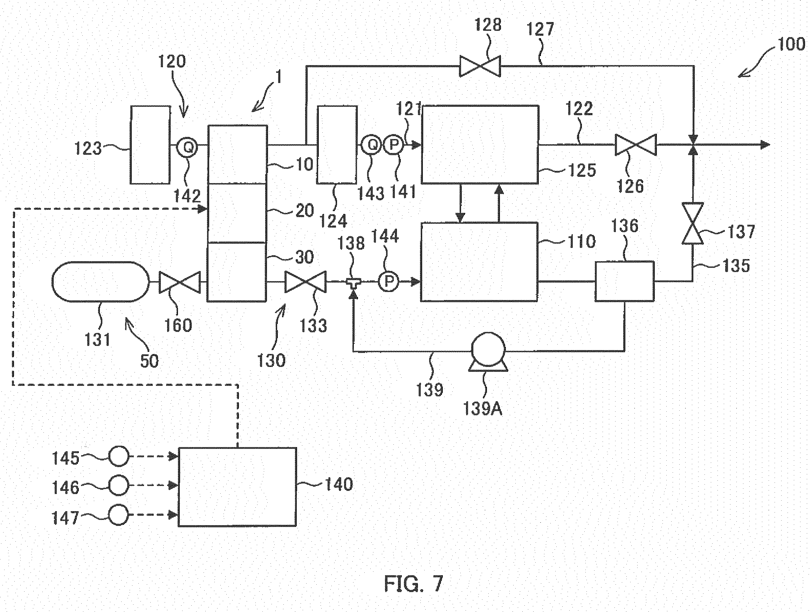

Further, in the fuel cell systems 100 according to the present invention with the cathode gas supplying devices 1 of the first and second embodiments, a pressure reducing valve 160 is disposed between the high-pressure tank 131 and the turbine 30 in the anode gas supply passage 132 as shown in FIG. 7. By introducing the high-pressure anode gas to be supplied to the turbine 30 from downstream of the pressure reducing valve 160 configured to reduce the pressure of the anode gas to be supplied to the fuel cell stack 110 in this way, the anode gas adjusted to a constant pressure can be supplied to the turbine 30. Thus, the turbine 30 can be stably driven and the controllability of the compressor 10 can be enhanced.

Further, in the first and second embodiments, the clutch 40 and the like may be controlled to compensate for a shortage of the rotational drive force of the electric motor 20 by the rotational drive force of the turbine 30 using the electric motor 20 as a main driving source for the compressor 10 and the turbine 30 as an auxiliary driving source. Also by this, the responsiveness of the compressor 10 for supplying the cathode gas to the fuel cell stack 110 can be improved as compared to a conventional cathode gas supplying device in which a compressor is driven only by anode gas supplied from a high pressure tank to a fuel cell stack since the electric motor 20 excellent in responsiveness serves as the main driving source and the turbine 30 to be driven by the working fluid serves as the auxiliary driving source.

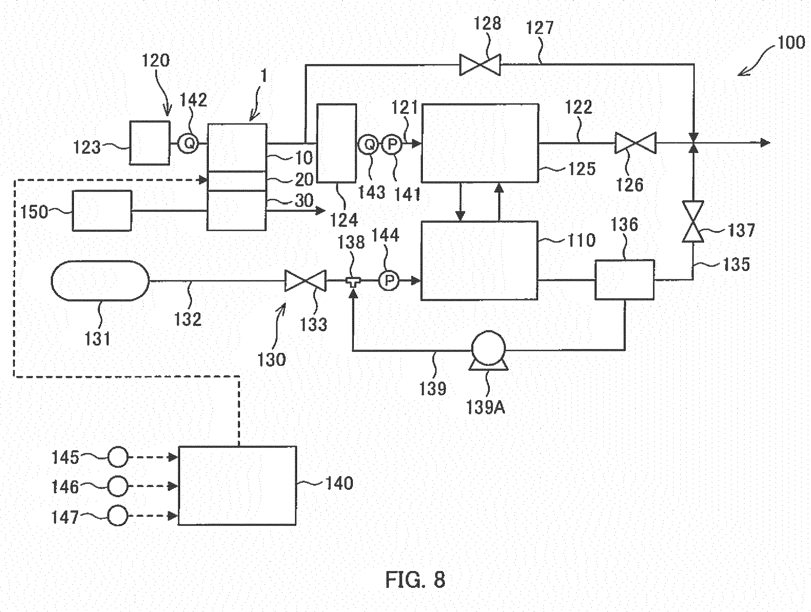

Further, although the turbine 30 is configured to be driven by the anode gas to be supplied to the fuel cell stack 110 in the first and second embodiments, there is no limitation to this. For example, as shown in FIG. 8, the turbine 30 may be driven by supplying working fluid different from the anode gas, e.g. working fluid used in the vehicle, from the working fluid supplying device 50 to the turbine 30. Effects similar to those of the first and second embodiments can be obtained also by this.

An air conditioner for cooling and heating a vehicle cabin, a cooling device for cooling the fuel cell stack 110, traveling wind or the like is employed as the working fluid supplying device 50. If the working fluid supplying device 50 is an air conditioner, refrigerant circulating in the air conditioner is supplied as working fluid to the turbine 30. If the working fluid supplying device 50 is a cooling device, cooling water circulating in the cooling device is supplied as working fluid to the turbine 30.

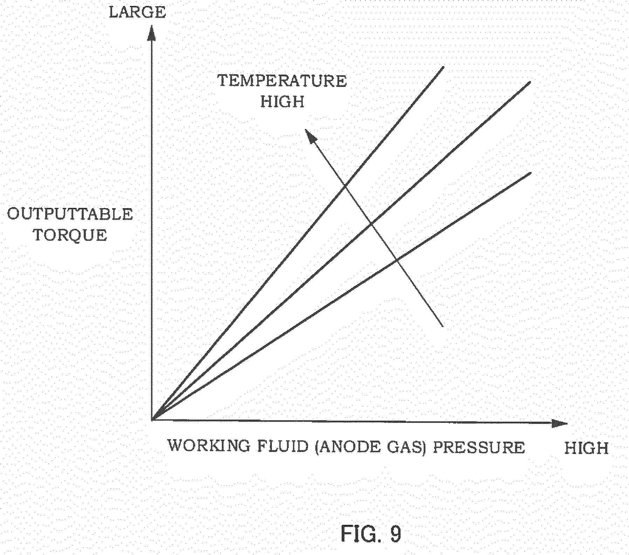

Further, although the outputtable torque of the turbine 30 is calculated on the basis of the pressure of the anode gas with reference to the table of FIG. 5 in the fuel cell systems 100 according to the first and second embodiments, the outputtable torque of the turbine 30 can also be calculated on the basis of the pressure and temperature of the anode gas with reference to a map shown in FIG. 9. The temperature of the anode gas may be detected, for example, by providing a temperature sensor between the high pressure tank 131 and the turbine 30 in the anode gas supply passage 132. As the temperature of the anode gas increases, a density of the anode gas increases and the amount of energy of the anode gas as the working fluid also increases. Thus, the outputtable torque of the turbine 30 can be accurately calculated by making such a correction that the outputtable torque of the turbine 30 increases as the temperature increases as shown in the map of FIG. 9.

## Claims

1. A fuel cell system (100) including a fuel cell (110) configured to generate power by having an anode gas and a cathode gas respectively supplied to an anode and a cathode of the fuel cell, the fuel cell system (100) comprising:
a compressor (10) configured to supply the cathode gas to the cathode; and
a driving device (11) configured to drive the compressor (10); and
a control device (140) configured to control the driving device (11) on the basis of an operating state of the fuel cell system (100),
a cathode gas supply passage (121) in which the cathode gas to be supplied to the fuel cell (110) flows; and
a high pressure tank (131) configured to store the anode gas to be supplied to the fuel cell (110); and
an anode gas supply passage (132) configured to supply the anode gas discharged from the high-pressure tank (131) to the fuel cell (110),
wherein the driving device (11) includes at least an electric motor (20) and a turbine (30), the turbine (30) configured to be driven by the anode gas as its working fluid, wherein the compressor (10) is provided in the cathode gas supply passage (121),
wherein the electric motor (20) is provided between the cathode gas supply passage, (121) and the anode gas supply passage (132), and
wherein one end of an output rotary shaft (24) of the electric motor (20) is connected to the compressor (10), and the other end thereof is connected to the turbine (30),
**characterized in that**
the high-pressure anode gas to be supplied to the turbine (30) is introduced to the turbine from downstream of a pressure reducing valve (160) configured to reduce a pressure of the anode gas to be supplied to the fuel cell.

2. The fuel cell system (100) according to claim 1,
wherein the electric motor (20) and the turbine (30) are coaxially provided.

3. The fuel cell system (100) according to claim 1 or 2,
wherein the driving device (11) comprises a clutch (40) in a power transmission path (24), and a drive force of the turbine (30) is transmitted to the compressor (20) in the power transmission path (24).

4. The fuel cell system (100) according to claim 1, wherein the high-pressure anode gas to be supplied to the turbine (30) is introduced from downstream of a high pressure tank (131) and returns to upstream of a pressure control valve (133) configured to adjust a pressure of the anode gas to be supplied to the fuel cell (110).

5. The fuel cell system (100) according to any one of claims 1 to 4, wherein the driving device (11) further comprises a flywheel (31) configured to rotate together with the turbine (30).

## Patentansprüche

1. Brennstoffzellen-System (100), das eine Brennstoffzelle (110) enthält, die so eingerichtet ist, dass sie Energie erzeugt, indem ein Anodengas und ein Kathodengas einer Anode bzw. einer Kathode der Brennstoffzelle zugeführt werden, wobei das Brennstoffzellen-System (100) umfasst:
einen Kompressor (10), der so eingerichtet ist, dass er der Kathode das Kathodengas zuführt;
eine Antriebseinrichtung (11), die so eingerichtet ist, dass sie den Kompressor (10) antreibt;
eine Steuerungseinrichtung (140), die so eingerichtet ist, dass sie die Antriebseinrichtung (11) auf Basis eines Betriebszustandes des Brennstoffzellen-Systems (100) steuert, einen Kathodengas-Zuführkanal (121), in dem der Brennstoffzelle (110) zuzuführendes Kathodengas strömt; und
einen Hochdruckbehälter (131), der so eingerichtet ist, dass er das der Brennstoffzelle (110) zuzuführende Anodengas speichert; sowie
einen Anodengas-Zuführkanal (132), der so eingerichtet ist, dass er das aus dem Hochdruckbehälter (131) ausgestoßene Anodengas der Brennstoffzelle (110) zuführt,
wobei die Antriebseinrichtung (11) wenigstens einen Elektromotor (20) und eine Turbine (30) enthält und die Turbine (30) so eingerichtet ist, dass sie mit dem Anodengas als ihrem Arbeitsfluid angetrieben wird,
der Kompressor (10) in dem Kathodengas-Zuführkanal (121) angeordnet ist,
der Elektromotor (20) zwischen dem Kathodengas-Zuführkanal (121) und dem Anodengas-Zuführkanal (132) angeordnet ist, und
ein Ende einer Ausgangs-Drehwelle (24) des Elektromotors (20) mit dem Kompressor (10) verbunden ist, und das andere Ende derselben mit der Turbine (30) verbunden ist,
**dadurch gekennzeichnet, dass**
das der Turbine (30) zuzuführende Hochdruck-Anodengas in die Turbine (30) stromab von einem Druckreduzier-Ventil (160) eingeleitet wird, das so eingerichtet ist, dass es einen Druck des der Brennstoffzelle zuzuführenden Anodengases reduziert.

2. Brennstoffzellen-System (100) nach Anspruch 1,
wobei der Elektromotor (20) und die Turbine (30) koaxial angeordnet sind.

3. Brennstoffzellen-System (100) nach Anspruch 1 oder 2,
wobei die Antriebseinrichtung (11) eine Kupplung (40) auf einem Kraftübertragungsweg (24) umfasst und eine Antriebskraft der Turbine (30) auf dem Kraftübertragungsweg (24) zu dem Kompressor (10) übertragen wird.

4. Brennstoffzellen-System (100) nach Anspruch 1,
wobei das der Turbine (30) zuzuführende Hochdruck-Anodengas stromab von einem Hochdruckbehälter (131) eingeleitet wird und zu einer stromauf liegenden Seite eines Drucksteuerungs-Ventils (133) zurückströmt, das so eingerichtet ist, dass es einen Druck des der Brennstoffzelle (110) zuzuführenden Anodengases reguliert.

5. Brennstoffzellen-System (100) nach einem der Ansprüche 1 bis 4,
wobei die Antriebseinrichtung (11) des Weiteren ein Schwungrad (31) umfasst, das so eingerichtet ist, dass es sich zusammen mit der Turbine (30) dreht.

## Revendications

1. Système de pile à combustible (100) incluant une pile à combustible (110) configurée pour générer de l'énergie grâce à la fourniture respective d'un gaz d'anode à l'anode et d'un gaz de cathode à la cathode de la pile à combustible, le système de pile à combustible (100) comprenant :
un compresseur (10) configuré pour délivrer le gaz de cathode à la cathode, et
un dispositif d'entraînement (11) configuré pour entraîner le compresseur (10), et
un dispositif de commande (140) configuré pour piloter le dispositif d'entraînement (11) sur la base de l'état fonctionnel du système de pile à combustible (100),
un passage de fourniture de gaz de cathode (121) dans lequel circule le gaz de cathode à fournir à la pile à combustible (110), et
un réservoir sous haute pression (131) configuré pour stocker le gaz d'anode à fournir à la pile à combustible (110), et
un passage de fourniture de gaz d'anode (132) configuré pour délivrer le gaz d'anode déversé du réservoir sous haute pression (131) à la pile à combustible (110),
dans lequel le dispositif d'entraînement (11) inclut au moins un moteur électrique (20) et une turbine (30), la turbine (30) étant configurée pour être entraînée par le gaz d'anode utilisé comme fluide de travail,
dans lequel le compresseur (10) est disposé dans le passage de fourniture de gaz de cathode (121),
dans lequel le moteur électrique (20) est disposé entre le passage de fourniture de gaz de cathode (121) et le passage de fourniture de gaz d'anode (132), et
dans lequel une extrémité de l'arbre tournant de sortie (24) du moteur électrique (20) est reliée au compresseur (10) et son autre extrémité est reliée à la turbine (30),
**caractérisé en ce que**
le gaz d'anode sous haute pression à fournir à la turbine (30) est introduit vers la turbine depuis l'aval d'une soupape de réduction de pression (160) configurée pour réduire la pression du gaz d'anode à fournir à la pile à combustible.

2. Système de pile à combustible selon la revendication 1,
dans lequel le moteur électrique (20) et la turbine (30) sont disposés de façon coaxiale.

3. Système de pile à combustible selon la revendication 1 ou la revendication 2,
dans lequel le dispositif d'entraînement (11) comprend un embrayage (40) dans une ligne de transmission de puissance (24), et la force d'entraînement de la turbine (30) est transmise au compresseur (10) dans la ligne de transmission de puissance (24).

4. Système de pile à combustible selon la revendication 1,
dans lequel le gaz d'anode sous haute pression à fournir à la turbine (30) est introduit depuis l'aval d'un réservoir sous haute pression (131) et revient à l'amont d'une soupape de commande de pression (133) configurée pour ajuster la pression du gaz d'anode à fournir à la pile à combustible (110) .

5. Système de pile à combustible selon l'une quelconque des revendications 1 à 4,
dans lequel le dispositif d'entraînement (11) comprend en outre un volant d'inertie configuré pour tourner en même temps que la turbine (30).
